# EUROPEAN PATENT APPLICATION

(11) **EP 4 716 173 A1**
(43) Date of publication of application: **25.03.2026**
(21) Application number: 24807297.7
(22) Date of filing: 20.05.2024
(51) Int. Cl.: H04L 43/02, H04L 12/22, H04L 12/66

(54) **UNAUTHORIZED ACCESS DETECTION SYSTEM**

(30) Priority: 18.05.2023 JP 2023082307
(71) Applicant: Cyber Solutions Inc., Sendai-shi, Miyagi 989-3204 (JP)
(72) Inventor: KEENI, Glenn Mansfield, Sendai-shi, Miyagi 989-3204 (JP)
(74) Representative: Dr. Weitzel & Partner
(86) International application number: PCT/JP2024/018425
(87) International publication number: WO 2024/237347

(57) **Abstract**

The present invention is an "Unauthorized Access Detection System" for detecting unauthorized packets transmitted between a private network 10 and an external network in an IP communication network, includes an Unauthorized Access Detection Apparatus 20, located at a relay point between the private network 10 and the external network, for detecting unauthorized packets used in IP communication. Further, the Unauthorized Access Detection Apparatus 20 includes;
a Monitoring Unit 21 for collecting IP packets transmitted between the private network and the external network,
a DNS Table Generation Unit 22 for extracting DNS response packets from the IP packets collected by the Monitoring Unit 21, and generating a DNS-Table that maps mapping IP addresses to corresponding domain names based on information included in said DNS response packets,
a Profile Generation Unit 23 for mapping a source IP address and a destination IP address, each included in said respective IP packets collected by the Monitoring Unit 21, to a corresponding source domain name and destination domain name, respectively, based on entries in the DNS-Table and recording, as Profile-Information, information of said IP packets for each said domain name, and
an Unauthorized Packet Detection Unit 24 that identifies IP packets for inspection when their source IP address, destination IP, or both cannot be mapped to domain names by the Profile Generation Unit 23, and additionally uses a detection function (Detection-Function 1) configured to compare the source and destination domain names associated with each IP packet, as recorded in the Profile-Information by the Profile Generation Unit 23, against a predefined Domain-List with valid domain names registered, and to identify, as a packet subject to inspection, any IP packet for which either the source domain name, the destination domain name, or both are determined to fall outside the scope of valid domain names registered in the Domain-List.

## Description

### TECHNICAL FIELD

The present invention relates to a technology for detecting unauthorized access by collecting IP (Internet Protocol Communication) packets transmitted between a private network and an external network.

### BACKGROUND TECHNOLOGY

Recently, as communication network environments have become larger and networks have become more interconnected, and threats such as unauthorized access to network systems and Cyberterrorism targeting critical infrastructure have increased, it has become increasingly important to protect network resources from unauthorized access.

Particularly in an environment where networks are interconnected, it is an effective means of protecting the private network to detect unauthorized access by monitoring IP packets transmitted between a private network and an external network.

"Patent document 1" discloses an IP communication network system, in which relay devices are placed at the borders of autonomous systems in an environment where many autonomous systems are interconnected, wherein said relay devices discard the unauthorized packet based on the filtering information for detecting the unauthorized packet, and distribute the filtering information to all other relay devices within the same autonomous system. Furthermore, it is disclosed that a host computer within an autonomous system detects unauthorized access when the number of unauthorized attempts for each message type of the IP packet (e.g., ICMP, Telnet, ftp, etc.) exceeds a predetermined threshold.

[Patent document 1] Japanese Patent Registration No.3723076.

### DISCLOSURE OF THE INVENTION

### PROBLEM TO BE SOLVED BY THE INVENTION

As described above, it is an effective means of protecting the private network to detect unauthorized access by monitoring IP packets transmitted between a private network and an external network. For example, in Patent Document 1, it is provided to execute detecting unauthorized access based on the number of unauthorized attempts for each message type as a predetermined index.

However, in Patent Document 1, there is a problem that the system load increases as the total number of IP packets increases in an environment where network scale has expanded.

To solve the above problem, the purpose of the present invention is to provide a system for collecting IP packets transmitted between a private network and an external network, identifying the domain names corresponding to the IP addresses in each IP packets, and detecting unauthorized packets.

### MEANS TO SOLVE THE PROBLEM

In order to achieve the above purpose, the invention described in Claim 1 is An Unauthorized Access Detection System for detecting unauthorized packets transmitted between a private network and an external network in an IP communication network, comprising:
an Unauthorized Access Detection Apparatus, located at a relay point between the private network and the external network, for detecting unauthorized packets used in IP communication;
wherein the Unauthorized Access Detection Apparatus includes:
   a Monitoring Unit for collecting IP packets transmitted between the private network and the external network,
   a DNS Table Generation Unit for extracting DNS response packets from the IP packets collected by the Monitoring Unit, and generating a DNS-Table that maps IP addresses to corresponding domain names based on information included in said DNS response packets,
   a Profile Generation Unit for mapping a source IP address and a destination IP address, each included in said respective IP packets collected by the Monitoring Unit, to a corresponding source domain name and destination domain name, respectively, based on entries in the DNS-Table and recording, as Profile-Information, information of said IP packets including {date and time, source domain name, destination domain name} for each said domain name, and
   an Unauthorized Packet Detection Unit that identifies IP packets for inspection when their source IP address, destination IP, or both cannot be mapped to domain names by the Profile Generation Unit; further
   wherein the Unauthorized Packet Detection Unit,
   includes a Domain-List with valid domain names registered, and
   uses a detection function (Detection-Function 1) configured to compare the source and destination domain names associated with each IP packet, as recorded in the Profile-Information by the Profile Generation Unit, against the predefined Domain-List, and to identify, as a packet subject to inspection, any IP packet for which either the source domain name, the destination domain name, or both are determined to fall outside the scope of valid domain names registered in the Domain-List.

The invention described in Claim 2 is the system according to Claim 1, wherein the Unauthorized Packet Detection Unit,
includes the Domain-List in which invalid domain names are registered in addition to valid domain names, and
uses a detection function (Detection-Function 2) configured to compare the source and destination domain names associated with each IP packet, as recorded in the Profile-Information by the Profile Generation Unit, against the predefined Domain-List, and to identify, as a packet subject to inspection, any IP packet for which either the source domain name, the destination domain name, or both are determined to fall within the scope of invalid domain names registered in the Domain-List.

The invention described in Claim 3 is the system according to Claim 1 or Claim 2, wherein the Unauthorized Packet Detection Unit,
includes a Time-List with valid date and time information registered, and
uses a detection function (Detection-Function 3) configured to compare the date and time information associated with each IP packet, as recorded in the Profile-Information by the Profile Generation Unit, against the predefined Time-List, and to identify, as a packet subject to inspection, any IP packet for which the date and time information is determined to fall outside the range of valid dates, days and times specified by entries registered in the Time-List.

The invention described in Claim 4 is the system according to Claim 1, comprising:
a DNS Resolver located within the private network,
a DNS Packet Monitor M1, located within the private network, for collecting DNS response packets transmitted by the DNS Resolver and recording information including {date, day and time, source IP address, and domain name} based on said DNS response packets to DNS Log Information D1, and
a DNS Packet Monitor M2, located within the private network, for collecting DNS response packets transmitted by a NAT-enabled router located within the private network and recording information including {date and time, source IP address, and domain name} based on said DNS response packets to DNS Log Information D2; further
wherein the Unauthorized Access Detection Apparatus,
includes an Unauthorized Apparatus Identification Unit, which uses an identification function (Identification-Function 1), configured to search the DNS log Information D1 using the {date, day and time, domain name} information of inspected packets detected by the Unauthorized Packet Detection Unit, as a search key, and to identify one or more apparatuses that are carrying out unauthorized access based on the source IP address of the corresponding DNS packet, and
an identification function (Identification-Function 2), configured, in cases where unauthorized access apparatuses cannot be identified by Identification Function 1, to search DNS Log Information D2 using the {date and time, domain name} information of inspected packets detected by the Unauthorized Packet Detection Unit as a search key, and to identify one or more unauthorized access apparatuses based on the source IP address of the corresponding DNS packet.

The invention described in Claim 5 is the system according to Claim 1, comprising:
a DNS Packet Monitor M2, located within the private network, for collecting DNS response packets transmitted by a NAT-enabled router located within the private network and recording information including {date and time, source IP address, and domain name} based on said DNS response packets to DNS Log Information D2; further
wherein the Unauthorized Access Detection Apparatus,
includes an Unauthorized Apparatus Identification Unit, which uses an identification function (Identification-Function 2), configured to search DNS Log Information D2 using the {date and time, domain name} information of inspected packets detected by the Unauthorized Packet Detection Unit as a search key, and to identify one or more unauthorized access apparatuses based on the source IP address of the corresponding DNS packet.

The invention described in Claim 6 is the system according to Claim 1, wherein the Unauthorized Packet Detection Unit,
uses a notification function (Notification-Function 1), configured to count, for each fixed time slot, the number of IP packets associated with the same domain name, based on the IP packet information recorded as the Profile-Information by the Profile Generation Unit, and to issue an alert notification when said count of IP packets exceeds a predefined threshold value T1.

The invention described in Claim 7 is the system according to Claim 1, wherein the Unauthorized Packet Detection Unit,
uses a notification function (Notification-Function 2), configured to count, for each fixed time slot, the number of IP packets associated with different domain names, based on IP packet information recorded as the Profile-Information by the Profile Generation Unit, and to issue an alert notification when said count of distinct domain names exceeds a preset threshold value T2.

### EFFECT OF THE INVENTION

The present invention produces the effect of being able to easily detect unauthorized packets, by collecting IP packets transmitted between a private network and an external network, identifying the domain name of the IP packets, and comparing said domain name with the Domain-List predetermined with valid domain names registered. Further, the present invention produces the effect of protecting network environment resources from unauthorized access and acts such as cyberterrorism targeting critical infrastructure, by taking measures against unauthorized access at an early stage by identifying the target terminal related to the unauthorized packets.

### BRIEF DESCRIPTION OF DRAWINGS

Figure 1 shows an example of system configuration diagram for carrying out the present invention.
Figure 2 shows an example of functional configuration diagram of the Unauthorized Access Detection Apparatus.
Figure 3 shows an example of DNS-Table generated by the Unauthorized Access Detection Apparatus.
Figure 4 shows an example of Profile-Information recorded by the Unauthorized Access Detection Apparatus.
Figure 5 shows a flowchart of an example process executed to detect unauthorized packets by the Unauthorized Access Detection Apparatus.
Figure 6 shows an example of DNS Log Information recorded by the Unauthorized Access Detection Apparatus.
Figure 7 shows a flowchart of an example process executed to detect identify unauthorized access apparatuses by the Unauthorized Access Detection Apparatus.

### BEST MODE FOR CARRYING OUT THE INVENTION

In the following, a prototype embodying best mode of the present invention is described with reference to figures. However, the present invention is not limited to this prototype.

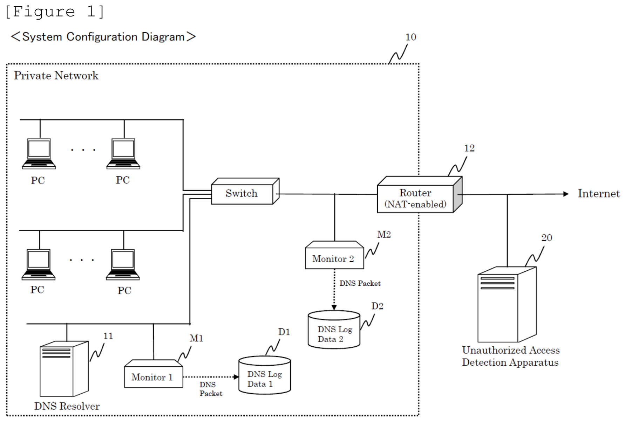

Figure 1 shows an example of system configuration diagram for carrying out the present invention "Unauthorized Access Detection System".

### 1. System configuration

As shown in Figure 1, the present invention "Unauthorized Access Detection System", for detecting unauthorized packets transmitted between a private network 10 and an external network in an IP communication network, includes an Unauthorized Access Detection Apparatus 20, located at a relay point between the private network 10 and the external network, for detecting unauthorized packets used in IP communication.

Further, the present invention "Unauthorized Access Detection System" includes a DNS Resolver 11 located within the private network 10, a DNS Packet monitor M1, located within the private network 10, for collecting DNS response packets transmitted by the DNS Resolver 11 and recording information including { date, day and time, source IP address, and domain name} based on said DNS response packets in DNS Log Information D1, and a DNS Packet monitor M2, located within the private network 10, for collecting DNS response packets transmitted by a NAT-enabled router 12 located within the private network 10 and recording information including {date and time, source IP address, and domain name} based on said DNS response packets in DNS Log Information D2.

The Unauthorized Access Detection Apparatus 20 executes process for collecting IP packets transmitted between the private network 10 and the external network, identifying the domain names corresponding to the IP packets, and detecting an IP packet as a packet to be inspected by examining said domain names.

Further, the Unauthorized Access Detection Apparatus 20 executes an Identification-Function 1, for searching the DNS Log Information D1 based on the information of said inspected packets, and identifying one or more unauthorized access apparatuses from the source IP address of the corresponding DNS packet.

Further, the Unauthorized Access Detection Apparatus 20 executes an Identification-Function 2, for, in cases where unauthorized access apparatuses cannot be identified by the Identification-Function 1, searching the DNS log Information D2 based on information of inspected packets, and identifying one or more unauthorized access apparatuses from the source IP address of the corresponding DNS packet.

In the system configuration shown in FIG. 1, the DNS Resolver 11 is located within the private network 10. On the other hand, in a system in which the DNS Resolver 11 is not located, the system does not include the DNS Packet Monitor M1 and the Unauthorized Access Detection Apparatus 20 executes the Identification-Function 2 without executing the Identification-Function 1.

### 2. Functional Configuration

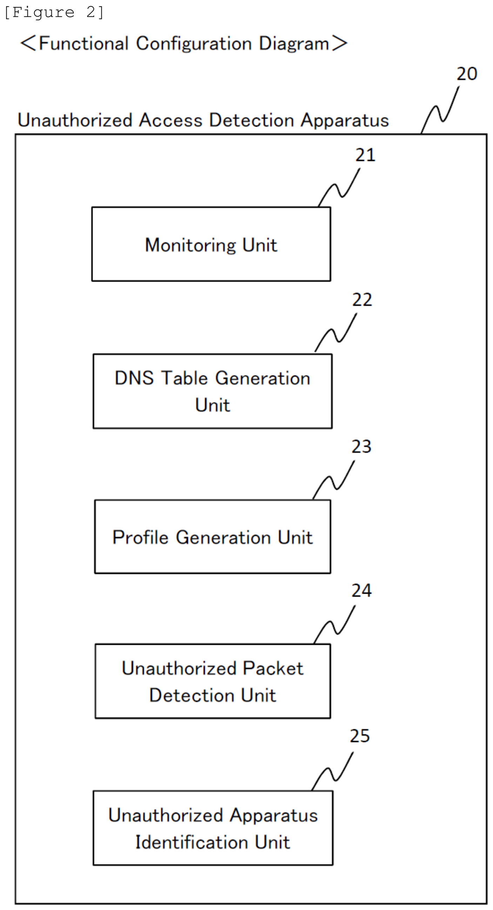

Next, the functional configuration of the Unauthorized Access Detection Apparatus 20 will be described as follows. Figure 2 shows an example of functional configuration diagram of the Unauthorized Access Detection Apparatus 20. As shown in Figure 2, the Unauthorized Access Detection Apparatus 20 includes a Monitoring Unit 21, a DNS Table Generation Unit 22, a Profile Generation Unit 23, an Unauthorized Packet Detection Unit 24, and an Unauthorized Apparatus Identification Unit 25.

The Monitoring Unit 21 collects IP packets transmitted between the private network 10 and the external network. Here, it is assumed that the Monitoring Unit 21 collects all IP packets. Further, for instance, the period for collecting IP packets may be configured to set as appropriate.

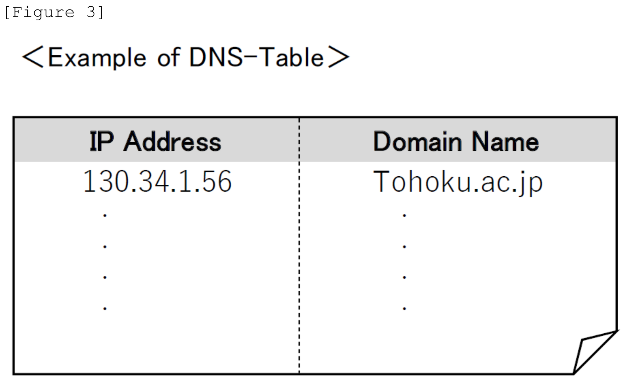

The DNS Table Generation Unit 22 extracts DNS response packets from the IP packets collected by the Monitoring Unit 21, and generates a DNS-Table that maps mapping IP addresses to corresponding domain names based on information included in said DNS response packets. For instance, the DNS-Table is generated by recording information as shown in Fig. 3. In the example shown in Fig. 3, "IP addresses" and "domain names corresponding to IP addresses" are recorded as the DNS table information.

The Profile Generation Unit 23 maps a source IP address and a destination IP address, each included in said respective IP packets collected by the Monitoring Unit 21, to a corresponding source domain name and destination domain name, respectively, based on entries in the DNS-Table and records, as Profile-Information, information of said IP packets including {date and time, source domain name, destination domain name} for each said domain name.

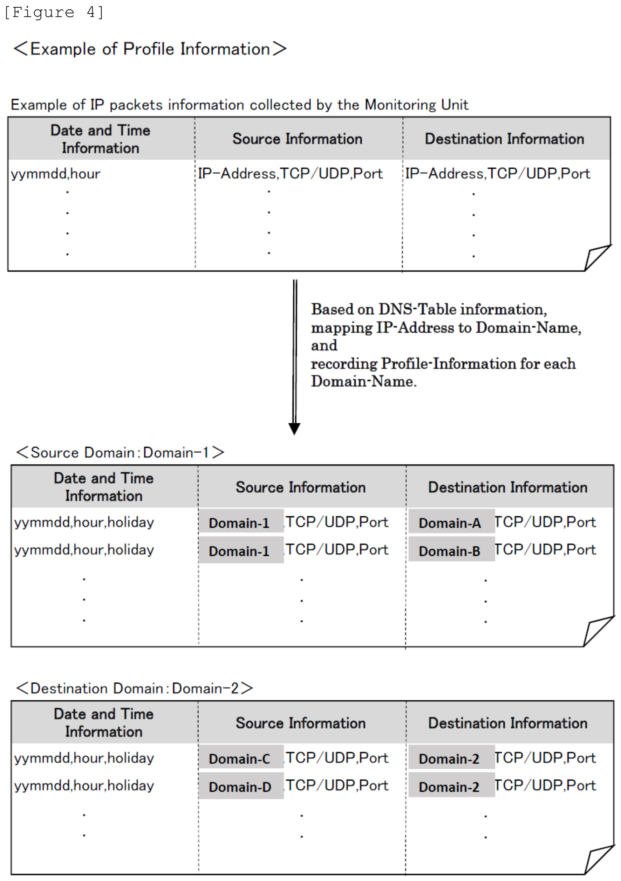

The Profile-Information is recorded for each domain, and for example the information shown in Fig. 4 is recorded. In the example of Fig. 4, for IP packet whose source domain is "Domain-1", "date and time information", "source information", and "destination information" are recorded in chronological order as the Profile-Information.

Here, in the example of Fig. 4, as the "date and time information", for instance, holiday information "holiday" is recorded in addition to the date and time. In addition, as the "source information", for instance, packet information of "domain name: Domain-1" is recorded in chronological order, including the "message type (TCP/UDP)" and the "port number". In addition, as the "destination information", for instance, packet information of "Domain name: Domain-A" "Domain name: Domain-B" ... is recorded in chronological order, including the "message type (TCP/UDP)" and the "port number".

Further, in the example of Fig. 4, for IP packet whose destination domain is "Domain-2", "date and time information", "source information", and "destination information" are recorded in chronological order as the Profile-Information.

Here, in the example of Fig. 4, as the "date and time information", for instance, holiday information "holiday" is recorded in addition to the date and time. In addition, as the "source information", for instance, packet information of "Domain name: Domain-C" "Domain name: Domain-D" ... is recorded in chronological order, including the "message type (TCP/UDP)" and the "port number". In addition, as the "destination information", for instance, packet information of "Domain name: Domain-2" is recorded in chronological order, including the "message type (TCP/UDP)" and the "port number".

As shown in the example of FIG. 4, the Profile Generation Unit 23 records the Profile-Information in chronological order for each source domain/destination domain.

The Unauthorized Packet Detection Unit 24 identifies IP packets for inspection when their source IP address, destination IP, or both cannot be mapped to domain names by the Profile Generation Unit 23. Here, the IP packet for inspection indicates a packet that has been diagnosed as possibly being an unauthorized packet and therefore needs to be investigated.

Further, the Unauthorized Packet Detection Unit 24 includes a Domain-List with valid domain names registered, and uses a detection function (Detection-Function 1) configured to compare the source and destination domain names associated with each IP packet, as recorded in the Profile-Information by the Profile Generation Unit 23, against the predefined Domain-List, and to identify, as a packet subject to inspection, any IP packet for which either the source domain name, the destination domain name, or both are determined to fall outside the scope of valid domain names registered in the Domain-List.

Further, the Unauthorized Packet Detection Unit 24 includes the Domain-List in which invalid domain names are registered in addition to valid domain names, and uses a detection function (Detection-Function 2) configured to compare the source and destination domain names associated with each IP packet, as recorded in the Profile-Information by the Profile Generation Unit 23, against the predefined Domain-List, and to identify, as a packet subject to inspection, any IP packet for which either the source domain name, the destination domain name, or both are determined to fall within the scope of invalid domain names registered in the Domain-List.

Here, the setting information of the Domain-List may be updated (added, changed, deleted) as needed manually or remotely.

Further, the Unauthorized Packet Detection Unit 24 includes a Time-List with valid date and time information registered, and uses a detection function (Detection-Function 3) configured to compare the date and time information associated with each IP packet, as recorded in the Profile-Information by the Profile Generation Unit 23, against the predefined Time-List, and to identify, as a packet subject to inspection, any IP packet for which the date and time information is determined to fall outside the range of valid dates, days and times specified by entries registered in the Time-List.

Here, the setting information of the Time-List may be updated (added, changed, deleted) as needed manually or remotely.

The Unauthorized Apparatus Identification Unit 25 uses an identification function (Identification-Function 1), configured to search the DNS log Information D1 using the {date, day and time, domain name} information of inspected packets detected by the Unauthorized Packet Detection Unit 24, as a search key, and to identify one or more apparatuses that are carrying out unauthorized access based on the source IP address of the corresponding DNS packet.

Further, the Unauthorized Apparatus Identification Unit 25 uses an identification function (Identification-Function 2), configured, in cases where unauthorized access apparatuses cannot be identified by Identification Function 1, to search DNS Log Information D2 using the {date and time, domain name} information of inspected packets detected by the Unauthorized Packet Detection Unit 24 as a search key, and to identify one or more unauthorized access apparatuses based on the source IP address of the corresponding DNS packet.

Here, the source IP address of inspected packets detected by the Unauthorized Packet Detection Unit 24 is expressed as a global IP address after being converted by the NAT compatible router. Therefore, it is necessary to execute the Identification-Function 1 and/or Identification-Function 2.

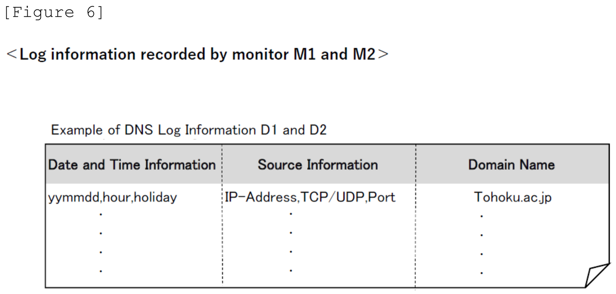

Additionally, an example of DNS Log Information D1 and DNS Log Information D2 is recorded as an example shown in Figure 6. In the example shown in FIG. 6, "Date and Time Information, " "Source Information", and "Domain Name" are recorded as DNS Log Information D1/D2. In addition, as the "Source information", for instance, the "message type (TCP/UDP) " and the "port number" are recorded.

On the other hand, in the system in which the DNS Resolver 11 is not located, the system may be not include the DNS Packet Monitor M1 and the Unauthorized Packet Detection Unit 24 executes Identification-Function 2 without executing Identification-Function 1.

As described above, the basic configuration of the present invention "Unauthorized Access Detection System" is described. Further, the system is enabled to detect "DDoS attacks, spam emails, spoofing attacks, etc" in addition to unauthorized access. This is explained as follows.

The Unauthorized Packet Detection Unit 24 uses a notification function (Notification-Function 1), configured to count, for each fixed time slot, the number of IP packets associated with the same domain name, based on the IP packet information recorded as the Profile-Information by the Profile Generation Unit 23, and to issue an alert notification when said count of IP packets exceeds a predefined threshold value T1. That is, when the number of IP packets associated with the same domain name for each fixed time slot exceeds predefined threshold value T1, an alert notification is issued, because there is a high possibility that an abnormal situation has occurred. In addition, the threshold value T1 can also be set in advance for each domain, and, can be updated manually or remotely as needed.

Further, the Unauthorized Packet Detection Unit 24 uses a notification function (Notification-Function 2), configured to count, for each fixed time slot, the number of IP packets associated with different domain names, based on IP packet information recorded as the Profile-Information by the Profile Generation Unit 23, and to issue an alert notification when said count of distinct domain names exceeds a preset threshold value T2. That is, when the number of IP packets associated with different domain names for each fixed time slot exceeds a preset threshold value T2, an alert notification is issued, because there is a high possibility that an abnormal situation such as a spoofing attack or a port scan attack has occurred. In addition, the threshold value T2 can also be set in advance for each domain, and can be updated manually or remotely as needed.

### 3. Processing Steps 1

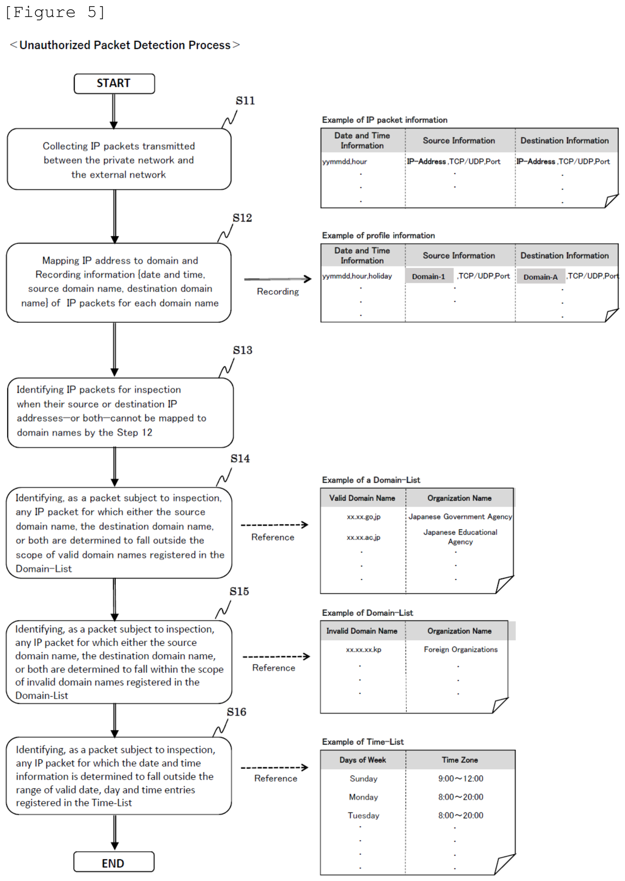

Next, "Unauthorized Packet Detection Process" executed by the Unauthorized Access Detection Apparatus 20 will being described with reference to the flowchart shown in Figure.5. Here, Figure 5 shows a flowchart of an example process executed to detect unauthorized packets by the Unauthorized Access Detection Apparatus 20. Each steps of said process are explained as follows.

### <Step S11>

In step S11, IP packets transmitted between the private network 10 and the external network are collected. Here, it is assumed that all IP packets are collected. Further, for instance, the period for collecting IP packets may be set as appropriate.

### <Step S12>

In step S12, source IP address and destination IP address included in the IP packets collected in step S11 are mapped to corresponding source domain name and destination domain name based on entries in the DNS-Table, which is generated by mapping IP addresses to domain names based on information included in DNS response packets, and recorded, as Profile-Information, information of said IP packets including {date and time, source domain name, destination domain name} for each said domain name.

The Profile-Information is recorded for each domain, and for example the information shown in Fig. 4 is recorded. In the example of Fig. 4, for IP packet whose source domain is "Domain-1", "date and time information", "source information", and "destination information" are recorded in chronological order as the Profile-Information.

Here, in the example of Fig. 4, as the "date and time information", for instance, holiday information "holiday" is recorded in addition to the date and time. In addition, as the "source information", for instance, packet information of "domain name: Domain-1" is recorded in chronological order, including the "message type (TCP/UDP)" and the "port number". In addition, as the "destination information", for instance, packet information of "Domain name: Domain-A" "Domain name: Domain-B" ... is recorded in chronological order, including the "message type (TCP/UDP)" and the "port number".

Further, in the example of Fig. 4, for IP packet whose destination domain is "Domain-2", "date and time information", "source information", and "destination information" are recorded in chronological order as the Profile-Information.

Here, in the example of Fig. 4, as the "date and time information", for instance, holiday information "holiday" is recorded in addition to the date and time. In addition, as the "source information", for instance, packet information of "Domain name: Domain-C" "Domain name: Domain-D" ... is recorded in chronological order, including the "message type (TCP/UDP)" and the "port number". In addition, as the "destination information", for instance, packet information of "Domain name: Domain-2" is recorded in chronological order, including the "message type (TCP/UDP)" and the "port number".

### <Step S13>

In step S13, an IP packet is identified for inspection when in step S12 their source IP address, destination IP, or both cannot be mapped to domain names. Here, the IP packet for inspection indicates a packet that has been diagnosed as a potentially unauthorized packet and therefore needs to be investigated.

### <Step S14>

In step S14, the source and destination domain names associated with each IP packet, as recorded in the Profile-Information in step 12, is compared against the predefined Domain-List in which valid domain names are registered, and any IP packet for which the source domain name, the destination domain name, or both are determined to fall outside the scope of valid domain names registered in the Domain-List are identified as a packet subject to inspection. The said Domain-List may, for instance, contain "domain names" and "organization names corresponding to domain names". Further, the information of said Domain-List may be updated (added, changed, deleted) as needed manually or remotely.

### <Step S15>

In step S15, the source and destination domain names associated with each IP packet, as recorded in the Profile-Information in Step 12, is compared against the predefined Domain-List in which invalid domain names are registered in addition to valid domain names, and any IP packet for which either the source domain name, the destination domain name, or both are determined to fall within the scope of invalid domain names registered in the Domain-List are identified as a packet subject to inspection. The said Domain-List, for instance, may contain "domain names" and "organization names corresponding to domain names" are registered. Further, the setting information of said Domain-List may be updated (added, changed, deleted) as needed manually or remotely.

### <Step S16>

In step S16, the date and time information associated with each IP packet, as recorded in the Profile-Information in step 12 is compared against the predefined Time-List with valid date and time information registered, and any IP packet for which the date and time information is determined to fall outside the range of valid dates, days and times specified by entries registered in the Time-List are identified as a packet subject to inspection. Here, as setting information for said Time-List, for instance, "days of Week" and "time Zone corresponding to the days of the week" are registered. Further, the setting information of said Time-List may be updated (added, changed, deleted) as needed manually or remotely.

On the other hand, there may be cases where no Time-List exists, in which case, although not shown in the flowchart, the process ends without performing step S16.

### 4. Processing Steps 2

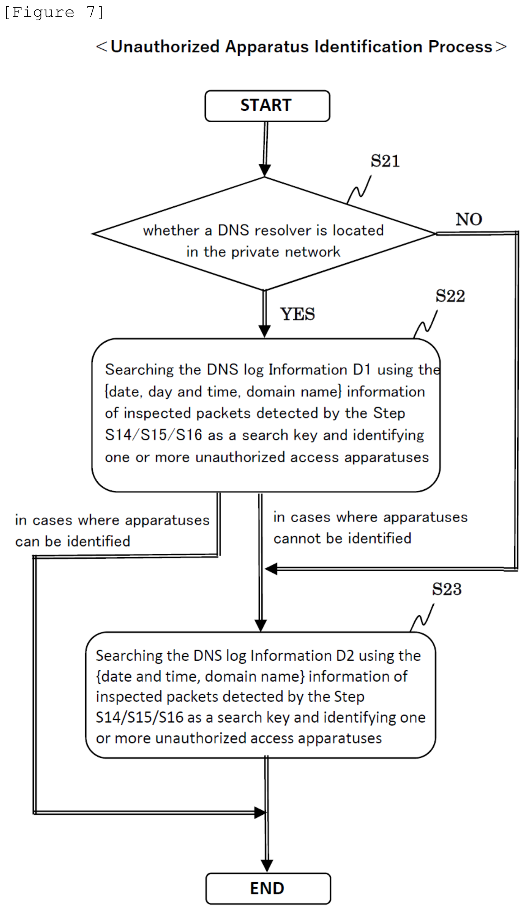

Next, "Unauthorized Apparatus Identification Process" executed by the Unauthorized Access Detection Apparatus 20 will being described with reference to the flowchart shown in Figure.7. Here, Figure 7 shows a flowchart of an example process executed to detect unauthorized packets by the Unauthorized Access Detection Apparatus 20. Each steps of said process are explained as follows.

### <Step S21>

In step S21, it is determined whether a DNS resolver 11 is located in the private network 10. If the DNS resolver 11 is located, the process proceeds to step S22, and if not, the process proceeds to step S23.

### <Step S22>

In step S22, an Identification-Function 1 for searching the DNS log Information D1 using the {date and time, domain name} information of inspected packets detected in steps S14/S15/S16 as a search key and identifying one or more unauthorized access apparatuses from the source IP address of the corresponding DNS packet is executed. If one or more unauthorized access apparatus can be identified in this step, the process ends, and if not, the process proceeds to step S23.

That is, in the Identification-Function 1, the DNS log Information D1 is searched based on the {date and time, domain name} information of inspected packets detected in steps S14/S15/S16 a search key, and if the DNS Log Information D1 contains information that matches the {date and time, domain name} of the packet to be inspected, the unauthorized access apparatus is identified from the corresponding source information. Further, there may be a slight time lag between the date and time information of said inspected packet and the date and time information of the DNS Log Information D1, and the search process takes this into consideration.

### <Step S23>

In step S22, an Identification-Function 2 for searching the DNS log Information D2 using the {date and time, domain name} information of inspected packets detected in steps S14/S15/S16 as a search key and identifying one or more unauthorized access apparatuses from the source IP address of the corresponding DNS packet is executed.

That is, in the Identification-Function 2, the DNS log Information D2 is searched based on the {date and time, domain name} information of inspected packets detected in steps S14/S15/S16 a search key, and if the DNS Log Information D2 contains information that matches the {date and time, domain name} of the packet to be inspected, the unauthorized access apparatus is identified from the corresponding source information. Further, there may be a slight time lag between the date and time information of said inspected packet and the date and time information of the DNS Log Information D2, and the search process takes this into consideration.

Here, since the source IP address of the inspected packets detected in steps S14/S15/S16 is a global IP address converted by a NAT-compatible router, it is not possible to identify the unauthorized access apparatus based on this IP address, and therefore it is necessary to execute the Identification-Function 1 and/or the Identification-Function 2.

Next, although not shown in this flowchart, it is also possible to notify a designated information terminal of information relating to the unauthorized access apparatus identified in steps S22/S23. It is also assumed that the information terminal to be notified is set in advance, and the setting information can be updated manually or remotely as needed.

For instance, steps S11-S16 executed in "Unauthorized Packet Detection Process" may be realized as a method executed by a computer or may be realized as a program to be executed by a computer. Further, steps S21-S23 executed in "Unauthorized Apparatus Identification Process" may be realized as a method executed by a computer or may be realized as a program to be executed by a computer.

### 5. Other System Configuration

In the system configuration diagram shown in Figure 1, the Unauthorized Access Detection Apparatus 20 is configured to be placed at a relay point between the private network 10 and the external network, but it is also possible to configure the Unauthorized Access Detection Apparatus 20 to be placed within the private network 10.

In this case, the source IP address of inspected packets detected by the Unauthorized Packet Detection Unit 24 is the private IP address before being converted by the NAT-compatible router, so it is possible to identify the Unauthorized Access Detection Apparatus based on this IP address.

Therefore, in this case, the DNS Packet Monitor M1 that records DNS Log Information D1 and the DNS Packet Monitor M2 that records DNS Log Information D2 shown in the system configuration diagram of FIG. 1 are not required.

### EXPLANATION OF CODES USED IN THE DIAGRAMS

- 10: Private network
- 11: DNS resolver
- 12: NAT-enabled router
- 20: Unauthorized Access Detection Apparatus
- 21: Monitoring Unit
- 22: DNS-Table Generation Unit
- 23: Profile Generation Unit
- 24: Unauthorized Packet Detection Unit
- 25: Unauthorized Apparatus Identification Unit
- M1: DNS Packet Monitor
- M2: DNS Packet Monitor
- D1: DNS Log Information
- D2: DNS Log Information

## Claims

1. An Unauthorized Access Detection System for detecting unauthorized packets transmitted between a private network and an external network in an IP communication network, comprising:
an Unauthorized Access Detection Apparatus, located at a relay point between the private network and the external network, for detecting unauthorized packets used in IP communication;
wherein the Unauthorized Access Detection Apparatus includes:
a Monitoring Unit for collecting IP packets transmitted between the private network and the external network,
a DNS Table Generation Unit for extracting DNS response packets from the IP packets collected by the Monitoring Unit, and generating a DNS-Table that maps IP addresses to corresponding domain names based on information included in said DNS response packets,
a Profile Generation Unit for mapping a source IP address and a destination IP address, each included in said respective IP packets collected by the Monitoring Unit, to a corresponding source domain name and destination domain name, respectively, based on entries in the DNS-Table and recording, as Profile-Information, information of said IP packets including {date and time, source domain name, destination domain name} for each said domain name, and
an Unauthorized Packet Detection Unit that identifies IP packets for inspection when their source IP address, destination IP, or both cannot be mapped to domain names by the Profile Generation Unit; further
wherein the Unauthorized Packet Detection Unit,
includes a Domain-List with valid domain names registered, and
uses a detection function (Detection-Function 1) configured to compare the source and destination domain names associated with each IP packet, as recorded in the Profile-Information by the Profile Generation Unit, against the predefined Domain-List, and to identify, as a packet subject to inspection, any IP packet for which either the source domain name, the destination domain name, or both are determined to fall outside the scope of valid domain names registered in the Domain-List.

2. The system according to Claim 1, wherein the Unauthorized Packet Detection Unit,
includes the Domain-List in which invalid domain names are registered in addition to valid domain names, and
uses a detection function (Detection-Function 2) configured to compare the source and destination domain names associated with each IP packet, as recorded in the Profile-Information by the Profile Generation Unit, against the predefined Domain-List, and to identify, as a packet subject to inspection, any IP packet for which either the source domain name, the destination domain name, or both are determined to fall within the scope of invalid domain names registered in the Domain-List.

3. The system according to Claim 1 or Claim 2, wherein the Unauthorized Packet Detection Unit,
includes a Time-List with valid date and time information registered, and
uses a detection function (Detection-Function 3) configured to compare the date and time information associated with each IP packet, as recorded in the Profile-Information by the Profile Generation Unit, against the predefined Time-List, and to identify, as a packet subject to inspection, any IP packet for which the date and time information is determined to fall outside the range of valid dates, days and times specified by entries registered in the Time-List.

4. The system according to Claim 1, comprising:
a DNS Resolver located within the private network,
a DNS Packet Monitor M1, located within the private network, for collecting DNS response packets transmitted by the DNS Resolver and recording information including {date, day and time, source IP address, and domain name} based on said DNS response packets to DNS Log Information D1, and
a DNS Packet Monitor M2, located within the private network, for collecting DNS response packets transmitted by a NAT-enabled router located within the private network and recording information including {date and time, source IP address, and domain name} based on said DNS response packets to DNS Log Information D2; further
wherein the Unauthorized Access Detection Apparatus,
includes an Unauthorized Apparatus Identification Unit, which uses an identification function (Identification-Function 1), configured to search the DNS log Information D1 using the {date, day and time, domain name} information of inspected packets detected by the Unauthorized Packet Detection Unit, as a search key, and to identify one or more apparatuses that are carrying out unauthorized access based on the source IP address of the corresponding DNS packet, and
an identification function (Identification-Function 2), configured, in cases where unauthorized access apparatuses cannot be identified by Identification Function 1, to search DNS Log Information D2 using the {date and time, domain name} information of inspected packets detected by the Unauthorized Packet Detection Unit as a search key, and to identify one or more unauthorized access apparatuses based on the source IP address of the corresponding DNS packet.

5. The system according to Claim 1, comprising:
a DNS Packet Monitor M2, located within the private network, for collecting DNS response packets transmitted by a NAT-enabled router located within the private network and recording information including {date and time, source IP address, and domain name} based on said DNS response packets to DNS Log Information D2; further
wherein the Unauthorized Access Detection Apparatus,
includes an Unauthorized Apparatus Identification Unit, which uses an identification function (Identification-Function 2), configured to search DNS Log Information D2 using the {date and time, domain name} information of inspected packets detected by the Unauthorized Packet Detection Unit as a search key, and to identify one or more unauthorized access apparatuses based on the source IP address of the corresponding DNS packet.

6. The system according to Claim 1, wherein the Unauthorized Packet Detection Unit,
uses a notification function (Notification-Function 1), configured to count, for each fixed time slot, the number of IP packets associated with the same domain name, based on the IP packet information recorded as the Profile-Information by the Profile Generation Unit, and to issue an alert notification when said count of IP packets exceeds a predefined threshold value T1.

7. The system according to Claim 1, wherein the Unauthorized Packet Detection Unit,
uses a notification function (Notification-Function 2), configured to count, for each fixed time slot, the number of IP packets associated with different domain names, based on IP packet information recorded as the Profile-Information by the Profile Generation Unit, and to issue an alert notification when said count of distinct domain names exceeds a preset threshold value T2.
